## Europäisches Patentamt

## European Patent Office

## Office européen des brevets

(19)

(11) Veröffentlichungsnummer: **0 282 067**
**B1**

(12) # EUROPÄISCHE PATENTSCHRIFT

(45) Veröffentlichungstag der Patentschrift:
**07.11.90**

(51) Int. Cl.⁵: **G08C 19/32**

(21) Anmeldenummer: **88103832.7**

(22) Anmeldetag: **10.03.88**

(54) **Schaltung zum Anlegen von Gleichspannungssignalen an ein mehradriges Kabel.**

(30) Priorität: **13.03.87 DE 3708163**

(43) Veröffentlichungstag der Anmeldung:
**14.09.88 Patentblatt 88/37**

(45) Bekanntmachung des Hinweises auf die Patenterteilung:
**07.11.90 Patentblatt 90/45**

(84) Benannte Vertragsstaaten:
**AT BE CH DE ES FR IT LI NL SE**

(56) Entgegenhaltungen:
**EP-A- 0 226 709**
**DE-A- 2 409 930**
**DE-B- 1 132 957**
**FR-A- 2 085 980**

(73) Patentinhaber: **GEZ Gesellschaft für elektrische Zugausrüstung mbH,**
**Flinschstrasse 20/51 Postfach 63 02 40, D-6000 Frankfurt am Main 60(DE)**

(72) Erfinder: **Knau, Udo, Dipl.-Ing., Ruhrstrasse 9, D-4950 Minden/Westf.(DE)**
Erfinder: **Bürgin, Peter, Dipl.-Ing., Castellring 49, D-6369 Nidderau 1(DE)**
Erfinder: **Klusacek, Michael, Dipl.-Ing., Eppsteiner Strasse 61, D-6233 Kelkheim-Fischbach(DE)**

(74) Vertreter: **Patentanwälte Grünecker, Kinkeldey, Stockmair & Partner, Maximilianstrasse 58, D-8000 München 22(DE)**

## Beschreibung

Die Erfindung bezieht sich auf eine Schaltung der im Oberbegriff des Patentanspruchs 1 genannten Art.

Bei einer solchen, aus der DE-OS 2 409 930 bekannten Schaltung erhält ein Durchgangskabel mit mehreren Adern an einer ersten Ader Bezugspotential und an einer der weiteren Adern ein Steuerpotential. Diese Potentiale werden über zwei-polige Schalter an die Adern wahlweise angelegt, um selektiv als Schalteinheiten wirkende Signalempfänger zu betätigen. Außerdem ist ein weiterer zwei-poliger Schalter vorgesehen, der bei seiner Betätigung Bezugspotential an eine der weiteren Adern und Steuerpotential an die erste Ader legt, um einen weiteren Signalempfänger zu betätigen. Den einzelnen Signalempfängern sind jeweils Dioden zugeordnet, die ihrerseits mit Zenerdioden in Reihe geschaltet sind, wobei die dem weiteren Signalempfänger zugeordnete Diode und Zenerdiode in umgekehrter Durchlaßrichtung geschaltet sind wie die den jeweils anderen Signalempfängern zugeordneten Dioden und Zenerdioden.

Die ältere, nicht vorveröffentlichte EP-A 226 709 offenbart bereits eine Schaltung zum Anlegen von Gleichspannungssignalen an ein mehradriges Zugdurchgangskabel zum Steuern von wenigstens einer Gruppe von Schaltelementen, wie beispielsweise Relais, die jeweils mit einer ersten Ader und einer einem jeden Schaltelement zugeordneten weiteren Ader verbunden sind und bei Anliegen eines Steuerpotentials an der entsprechenden weiteren Ader und eines Bezugspotentials an der ersten Ader ansprechen, mittels einer Gruppe von den Schaltelementen zugeordneten zwei-poligen Schaltern, die jeweils mit der ersten Ader und der dem zugeordneten Schaltelement entsprechenden weiteren Ader verbunden sind. Bei einer Betätigung von einem der Schalter wird die erste Ader mit dem Bezugspotential und die weitere Ader mit dem Steuerpotential beaufschlagt. Bei fehlender Betätigung der Schalter sind die Adern jeweils sowohl von Bezugspotential als von Steuerpotential getrennt. Es ist ein drei-poliger Schalter vorgesehen, mit dem eine erste der weiteren Adern mit dem Bezugspotential beaufschlagt werden kann, während eine zweite der weiteren Adern mit dem Steuerpotential beaufschlagt wird. Die sich ergebende Spannung zwischen den beiden weiteren Adern hat eine Polarität, die gegenüber der bei Zugdurchgangskabeln genormten Polarität der Steuersignale umgekehrt ist. An diese weiteren Adern ist eine Schalteinheit angeschlossen, die lediglich auf ein Spannungssignal mit dieser umgekehrten Polarität anspricht. Diese Schalteinheit kann sowohl ein Relais als auch eine andere Empfangseinheit, wie beispielsweise ein Optokoppler zur Ansteuerung eines Datenempfängers sein.

In der praktischen Anwendung liegen die beschriebenen Gruppen von Schaltern und Schaltelementen jeweils in der Lokomotive bzw. den einzelnen Wagen eines Zuges. Es sind nun äußerst unwahrscheinliche, jedoch nicht ausschließbare Fälle denkbar, in denen zum Zeitpunkt der Betätigung der Schalteinheit zum Anlegen des Signales mit umgekehrter Polarität dadurch ein unerwünschter Stromfluß herbeigeführt wird, daß beispielsweise in einem der Nachbarwagen ein zwei-poliger Schalter betätigt wird, der gleichfalls mit einer der weiteren Adern in Verbindung steht, an die auch die Schalteinheit angeschlossen ist. In diesem zwar seltenen, aber immerhin denkbaren Schaltzustand kann nicht ausgeschlossen werden, daß sich der Stromkreis von dem zwei-poligen Schalter des Nachbarwagens über die an den entsprechenden Adern des betreffenden Wagens angeschlossenen Schaltelemente schließt.

Beim Zugbetrieb gibt es insbesondere in innerstädtischen Bereichen und auch auf Hochgeschwindigkeitsstrecken im bergigen Land lange Tunnelstrecken, innerhalb denen die Notbremsung eines Zuges zumindest vor Erreichen eines in den Tunnelstrecken eventuell vorgesehenen Bahnhofes vermieden werden muß, da ein durch Notbremsung erfolgter Halt des Zuges in einer Tunnelstrecke meist zu größeren Gefahren führt als ein Verzögern der tatsächlichen Notbremsung bis zum Erreichen eines Bahnhofes oder aber eines Tunnelausgangs. Dieses liegt daran, daß nach erfolgter Notbremsung eines Zuges eine sehr lange Zeitdauer erforderlich ist, bis durch Aufbau eines ausreichenden Luftdruckes die Bremsen wieder gelöst werden können.

Aufgabe der Erfindung ist es, eine Schaltung der im Oberbegriff des Patentanspruchs 1 genannten Art so auszubilden, daß mit ihr unter Beibehaltung des üblichen Zugdurchgangskabels bei Bedarf eine Notbremsung verzögert und zu einem vom Zugpersonal gewünschten Zeitpunkt wieder freigegeben werden kann.

Bei einer Schaltung der genannten Art ist diese Aufgabe durch die im kennzeichnenden Teil des Patentanspruchs 1 angegebenen Merkmale gelöst

Eine erste weitere Ader dient zum übertragen eines ersten Befehls, mit dem eine unmittelbare Betätigung einer Notbremse nach Betätigen eines Notbremsschalters verhinderbar ist, während eine zweite weitere Ader zum übertragen eines zweiten Befehls dient, mit der die Wirkung des ersten Befehles aufhebbar ist. Mittels eines an die erste weitere Ader angeschlossenen Schaltelementes, das durch eine Schalteinheit betätigbar ist, kann eine Selbsthalteschaltung gesetzt werden, mit der die Notbremse deaktivierbar ist. Mittels eines an die zweite weitere Ader angeschlossenen Schaltelementes kann die Selbsthalteschaltung rückgesetzt werden. Diese Art der Beschaltung ermöglicht in vorteilhafter Weise, daß in einer ersten Betriebsart, in der die Selbsthalteschaltung nicht gesetzt ist, ein Fahrgast durch Betätigen des Notbremsschalters direkt eine Notbremsung einleiten kann. In der zweiten Betriebsart kann der Lokführer durch Setzen der Selbsthalteschaltung die Einleitung einer Notbremsung durch den Fahrgast verhindern, wodurch eine Notbremsung z.B während des Durchfahrens eines Tunnels unterbunden wird.

Vorzugsweise ist der weitere, wenigstens zwei-polige Schalter als wenigstens drei-poliger Schalter ausgebildet, bei dessen Betätigung derjenige der zwei-poligen Schalter von der weiteren Ader getrennt wird, der an derjenigen weiteren Ader angeschlossen ist, an die mittels des wenigstens drei-poligen Schalters das Bezugspotential anlegbar ist, da durch diese Maßnahme ein Kurzschlußstrom ausgeschlossen wird

Gemäß Anspruch 3 ist der wenigstens drei-polige Schalter als wenigstens sechs-poliger Schalter ausgeführt, bei dessen Betätigung das Bezugspotential und das Steuerpotential von dem zwei-poligen Schalter abgekoppelt wird, was gleichfalls einen Kurzschlußstrom aufgrund einer Fehlbetätigung eines Schalters verhindert

Die in Anspruch 4 angegebene Maßnahme, gemäß der bei Betätigung des wenigstens drei-poligen Schalters das Bezugspotential und das Steuerpotential von dem zwei-poligen Schalter abgekoppelt werden, verhindert bei gleichzeitiger Betätigung des wenigstens drei-poligen Schalters und des zwei-poligen Schalters Signalüberlagerungen und ungewünschte Schaltzustände.

Die in Anspruch 5 angegebene Maßnahme, gemäß der die Schaltelemente über Dioden an die weiteren Adern angeschlossen sind, stellt sicher, daß die jeweiligen Schaltelemente nur auf die ihnen zugeordnete Signalpolarität ansprechen.

Diesem Zwecke dient auch die in Anspruch 6 angegebene Maßnahme, gemäß der das weitere Schaltelement an die zwei Adern über eine weitere Diode angeschlossen ist.

Außerdem liegt zwischen der Schalteinheit und der weiteren Ader ein strombegrenzendes Element. Dieses strombegrenzende Element verhindert das Auftreten von Kurzschlußströmen bei gleichzeitiger Betätigung eines zwei-poligen Schalters sowie des weiteren Schalters und begrenzt damit die maximal auftretenden Stromwerte auf für die Schaltung unbedenkliche Größenordnungen.

Vorzugsweise ist gemäß Anspruch 7 mit der Selbsthalteschaltung ein Ventil in Betätigungsverbindung, mit dem die pneumatisch betätigbare Notbremse von durch Notbremsschalter betätigbaren Notbremsventilen absperrbar ist, so daß bei Absperren des Ventiles eine Betätigung der Notbremse auch bei Betätigung der Notbremsschalter verhindert wird. Durch diese Maßnahme behält der Lokführer die Entscheidungsfreiheit darüber, ob die vom Fahrgast gewünschte Notbremsung einzuleiten ist.

Eine einfache Ausgestaltung der Selbsthalteschaltung ist Gegenstand des Anspruchs 8, gemäß dem die Selbsthalteschaltung als Halterelais ausgeführt ist.

Wie in Anspruch 9 dargelegt ist, verbindet das Halterelais im ungesetzten Zustand die zweite weitere Ader über eine Diode mit einem Knotenpunkt und in gesetztem Zustand die erste weitere Ader über eine Diode mit dem Knotenpunkt, wobei zumindest ein zwei-poliger Schalter zwischen dem Knotenpunkt und der ersten Ader liegt, der bei Betätigung eines Notbremsschalters das Steuerpotential an die erste Ader und das Bezugspotential an den Knotenpunkt legt. Mit einer derartigen Schaltung kann eine Rückmeldung über den Notbremszustand von den einzelnen Wagen zur Lokomotive erfolgen. Diese Rückmeldung führt nicht zu einer Beeinträchtigung des gewählten Schaltzustandes der Selbsthalteschaltung.

Eine weitere vorteilhafte Ausgestaltung ist Gegenstand des Anspruchs 10, gemäß dem über je eine Diode ein Alarmgeber im Bereich der Lokomotive an die erste und zweite weitere Ader sowie die erste Ader angeschlossen ist. Mit dem Alarmgeber kann die Rückmeldung über den Notbremszustand dem Lokführer zur Kenntnis gebracht werden

Nachfolgend werden unter Bezugnahme auf die beiliegenden Zeichnungen bevorzugte Ausführungsformen gemäß der vorliegenden Erfindung näher erläutert. Es zeigen:

Fig. 1 eine erste Ausführungsform der erfindungsgemäßen Schaltung;
Fig. 2 eine zweite Ausführungsform der erfindungsgemäßen Schaltung, und
Fig. 3 eine dritte Ausführungsform der erfindungsgemäßen Schaltung.

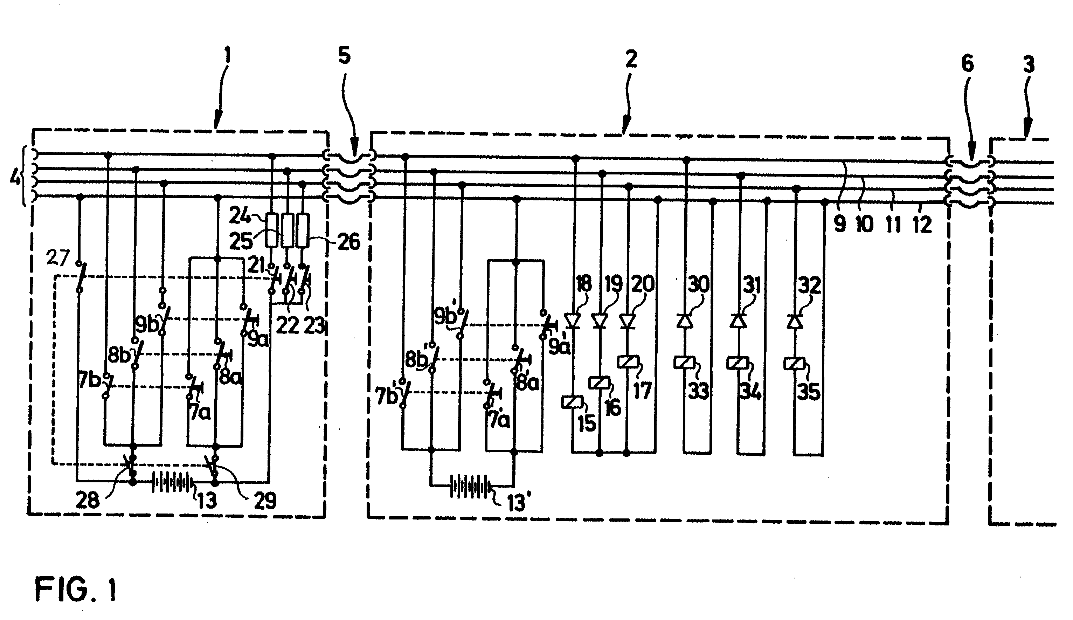

Bei der ersten Ausführungsform gemäß Fig. 1 deutet das Bezugszeichen 1 den Bereich der elektrischen Beschaltung einer Lokomotive an, während die Bezugszeichen 2 und 3 den Bereich der elektrischen Beschaltung von zwei Wagen andeuten. Die Lokomotive und die beiden Wagen sind durch ein gemeinsames Zugdurchgangskabel 4 elektrisch miteinander verbunden. Dieses Zugdurchgangskabel, das auch als Zugbus bezeichnet wird, ist üblicherweise ein 12-adriges Kabel, dessen erste bis achte Ader aus Gründen der Übersichtlichkeit nicht dargestellt ist. Die erste bis achte Ader dient gemäß der internationalen Vereinbarung im Rahmen der UIC zur Übermittlung von Durchsagen, Musik oder dem Fernsprechverkehr, während die neunte bis zwölfte Ader 9 bis 12 dem Ein- und Ausschalten der Beleuchtung sowie dem Schließen der Zugtüren dienen. Die zwölfte Ader dient zur Übertragung des Bezugspotentiales und kann, wir später näher erläutert wird, mit dem Minuspol einer Gleichspannungsquelle verbunden werden.

Die Verwendung des Zugdurchgangskabels 4 zwischen der Lokomotive und den Wagen wird über Steckverbinder 5, 6 hergestellt.

Im Schaltungsbereich der Lokomotive 1 liegen drei zwei-polige Schalter 7a, b, 8a, b, 9a, b, deren jeweils einer Pol mit dem Minuspol einer Gleichspannungsquelle 13 und der zwölften Ader 12 in Verbindung steht, während deren jeweils anderer Pol 7b, 8b, 9b mit jeweils einer weiteren Ader 9, 10, 11 und dem Pluspol der Gleichspannungsquelle 13 in Verbindung steht. Bei Betätigung des Schalters 7a, 7b wird die zwölfte Ader gegen Minus gelegt und die neunte Ader gegen Plus gelegt, wodurch das Schließen der Türen veranlaßt wird. Entsprechend bewirkt die Betätigung der Schalter 8, 9 die Erzeugung von Schaltbefehlen für das Einschalten oder Ausschalten der Zugbeleuchtung. Derartige Schaltergruppen finden sich sowohl im Triebfahrzeug bzw. der Lokomotive 1 wie auch in den jeweiligen Wagen 2, 3. Die entsprechenden Elemente in den Wagen haben gleiche Bezugszeichen, sind jedoch jeweils mit einem Apostroph bezeichnet.

Durch die zwischen den weiteren Adern 9 bis 11 und der ersten Ader 12 über die Schalter 7a, b, 8a, b, 9a, b erzeugbaren Gleichspannungssignale können als Relais 15, 16, 17 ausgestaltete Schaltelemente betätigt werden, die über Dioden jeweils an eine der weiteren Adern 9 bis 11 und an die erste Ader 12 angeschlossen sind.

Erfindungsgemäß sind ferner ein weiterer Taster 21 zum Erzeugen des Signals "Notbremse verzögern" sowie ein Taster 22 zum Erzeugen eines Betätigungssignales für eine elektropneumatische Bremse und ein Taster 23 zum Erzeugen eines Betätigungssignales für eine elektropneumatische Bremse vorgesehen. Diese Taster 21 bis 23 sind über Vorwiderstände 24 bis 26 an die weiteren Adern 9 bis 11 angeschlossen und mit dem Minuspol der Gleichspannungsquelle 13 verbunden. Ein jeweils zweiten Pol 27, der bei Betätigung der Taster 21 bis 23 mitbetätigt wird, steht mit dem Pluspol der Gleichspannungsquelle 13 in Verbindung. Bei Betätigung der Schalter 21 bis 23 wird über die Unterbrechungsschalter 28, 29 eine Trennung zwischen der Gleichspannungsquelle 13 und den zwei-poligen Schaltern 7a, 7b, 8a, 8b, 9a, 9b herbeigeführt. Durch diese Unterbrechung ist eine Betätigung dieser zwei-poligen Schalter 7a, 7b, 8a, 8b, 9a, 9b während einer Betätigung von einem der Taster 21 bis 23 wirkungslos. Über Dioden 30 bis 32 stehen Relais 33 bis 35 für die Funktion "Notbremse verzögern" sowie für die beiden elektropneumatischen Bremsen jeweils mit einer der weiteren Adern 9 bis 11 und der zwölften Ader 12 derart in Verbindung, daß sie immer nur auf ein gegenüber der UIC-Norm umgepoltes Signal zwischen der zwölften Ader 12 und einer der weiteren Adern 9 bis 11 ansprechen.

Die oben angesprochenen Vorwiderstände 24 bis 26 können ebenfalls als strombegrenzende Induktivitäten ausgeführt sein.

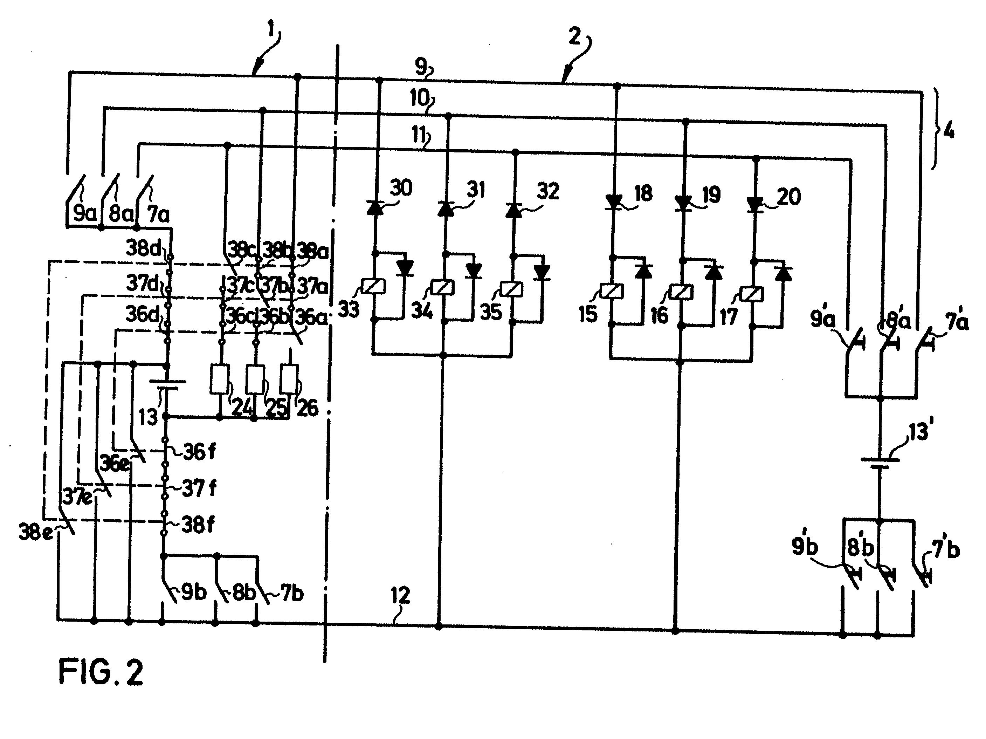

Die Ausführungsform gemäß Fig. 2 stimmt bezüglich ihrer Funktionsweise vollständig und bezüglich der Beschaltung weitgehend mit dem Ausführungsbeispiel gemäß Fig. 1 überein. Identische Teile und Schaltungen sind mit identischen Bezugszeichen bezeichnet, so daß auf eine wiederholte Erläuterung der entsprechenden Schaltungsteile verzichtet werden kann.

Die Taster 21 bis 23 mit dem gemeinsamen weiteren Pol 27 sowie den Unterbrechungsschaltern 28 und 29 bei der Ausführungsform gemäß Fig. 1 sind bei der Ausführungsform gemäß Fig. 2 durch drei Sechsfachschalter 36a bis f, 37a bis f, 38a bis f ersetzt. Die sechsfach Schalter enthalten zwei Gruppen von normalerweise geschlossenen Schaltern 36d, 37d, 38d, 36f, 37f, 38f, die jeweils in Reihe zwischen den zwei-poligen Schaltern 7a, b, 8a, b, 9a, b und der Gleichspannungsquelle 13 liegen. Ferner umfassen sie normalerweise geöffnete Schalter 36e, 37e, 38e zwischen dem Pluspols der Gleichspannungsquelle 13 und der zwölften Ader 12. Zwischen den strombegrenzenden Induktivitäten 24, 25, 26 und den neunten bis elften Adern 9 bis 11 sind jeweils zwei normalerweise geschlossene Schalter und ein normalerweise geöffneter Schalter eines jeden Sechsfachschalters derart in Reihe geschaltet, daß nur bei Betätigung eines einzigen der Sechsfachschalter 36 bis 38 eine der strombegrenzenden Induktivitäten 24 bis 26 mit einer der Adern 9 bis 11 zusammengeschaltet wird.

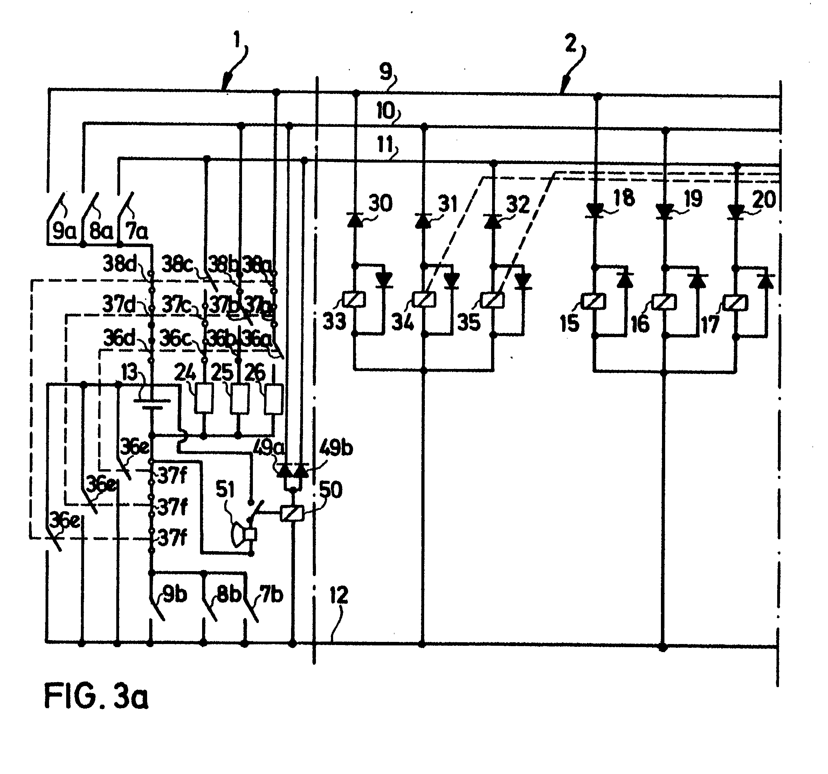

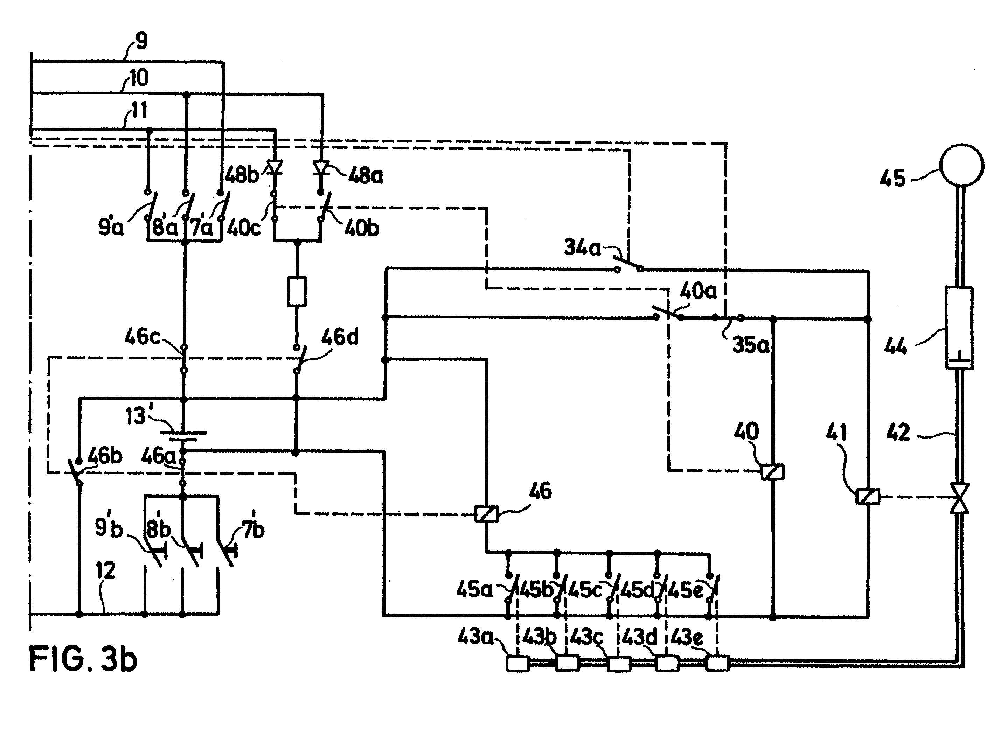

Die Ausführungsform gemäß Fig. 3 stimmt bezüglich ihrer Funktionsweise vollständig und bezüglich der Beschaltung ebenfalls weitgehend mit der Ausführungsform gemäß Fig. 2 überein. Identische Teile und Schaltungen sind wiederum mit identischen Bezugszeichen bezeichnet, so daß auch in diesem Fall auf eine wiederholte Erläuterung der entsprechenden Schaltungsteile verzichtet werden kann.

Wie bereits eingangs erläutert wurde, dient die zehnte Ader 10 zum Übertragen eines ersten Befehles "Notbremse verzögern", während die elfte Ader 11 zum Übertragen eines zweiten Befehles "Verzögerung aufheben" dient. Diese Befehle werden jeweils über die zehnte bzw. elfte Ader 10, 11 und über die erste Ader 12 mit negativer Polarität an der zehnten und elften Ader und mit jeweils positiver Polarität an der ersten Ader 12 übertragen. Durch das Signal "Notbremse verzögern" auf der zehnten Ader 10 wird das Relais 34 betätigt, wodurch das zugehörige, normalerweise geöffnete Relais-Schaltelement geschlossen wird. Entsprechend wird bei Auftreten eines Signalpulses auf der elften Ader 11 für den Befehl "Verzögerung aufheben" das an dieser Ader angeschlossene Relais 35 betätigt, wodurch das zugeordnete, normalerweise geschlossene Relais-Schaltelement 35a während des Vorliegens dieses Befehles geöffnet wird. Die beiden Relais- Schaltelemente 34a, 35a liegen zwischen dem Pluspol der Gleichspannungsquelle 13' und dem Verbindungspunkt eines Halterelais 40 mit einem parallel geschalteten Magnetventil 41, die ihrerseits mit dem Minuspol der Gleichspannungsquelle 13' verbunden sind. Nach Auftreten des ersten Befehls "Notbremse verzögern" wird somit kurzfristig das Relais-Schaltelement 34a geschlossen, wodurch das Halterelais 40 aktiviert wird und einen in Serie zu dem normalerweise geschlossenen Relais-Schaltelement 35a liegenden normalerweise geöffneten Schalter schließt. Bis zu einem Auftreten eines Impulses auf der elften Ader 11 bleibt somit das Halterelais in seinem gesetzen Zustand. Parallel zum Halterelais liegt, wie bereits erwähnt, das Magnetventil 41, das bei Betätigung eine Druckluftleitung 42 von Notbremsventilen 43a bis 43e abkoppelt. Bezüglich der Notbremsventile 43a bis 43e jenseits des Magnetventiles 41 liegt die durch Druckluft betätigte Notbremse 44, die von einer Druckluftquelle 45 gespeist wird. Bei an der Notbremse 44 anliegendem Druck bleibt die Notbremse unbetätigt. Bei Abfall des Druckes wird die Notbremse 44 betätigt.

Die Notbremsventile 43a bis 43e sind durch Notbremsschalter 45a bis 45e betätigbar. Die Notbremsschalter sind dem Fahrgast zugänglich, um bei Auftreten einer Notsituation eine Notbremsung einleiten zu können.

Wenn nun der erste Befehl "Notbremse verzögern" an der zehnten Ader 10 anliegt, ist das Relais 34 betätigt, so daß das normalerweise geöffnete Relais-Schaltelement 34a geschlossen wird, wodurch seinerseits das Halterelais 40 in seinen gesetzen Zustand gebracht wird. In diesem Zustand ist das Magnetventil 41 geschlossen. Demnach kann im gesetzten Zustand des Halterelais 40 eine Betätigung der Notbremsschalter 45a bis 45e und somit ein Öffnen den Notbremsventile 43a bis 43e nicht zu einem Abfall des Druckes an der Notbremse 44 und somit zu deren Betätigung führen. Ein anschließender Impuls auf der elften Ader 11 führt zum Öffen des normalerweise geschlossenen Relais-Schaltelementes 35a bei Betätigung des Relais 35, wodurch das Halterelais 40 in seinen rückgesetzten Zustand gebracht wird. In diesem Zustand wird das Magnetventil 41 geöffnet, so daß die Notbremse 44 in pneumatischer Verbindung mit den Notbremsventilen 43a bis 43e steht, so daß eine Betätigung der Notbremsschalter 45a bis 45e zur unmittelbaren Betätigung der Notbremse 44 führt.

Bei Betätigung einer der Notbremsschalter 45a bis 45e wird ein Vierfachschalter 46a bis 46d über das Relais 46 aktiviert. Bei der Aktivierung des Vierfachschalters 46a bis 46d werden die zwei-poligen Schalter 7a', 7b', 8a', 8b', 9a', 9b' aufgrund der Schalter 46a und 46c von der Gleichspannungsquelle 13' getrennt. Gleichzeitig verbinden die normalerweise geöffneten Schalter 46b, 46d des Vierfachschaltrelais 46 den Pluspol der Gleichspannungsquelle 13' mit der ersten Ader 12 und den Minuspol der Gleichspannungsquelle 13' mit einem Vorwiderstand 47, der mit einem normalerweise geöffneten Schalter 40b und einem normalerweise geschlossenen Schalter 40c in Verbindung steht, wobei diese Schalter 40b, 40c durch das Halterelais 40 betätigbar sind. Die genannten Schalter 40b, 40c stehen über Dioden 48 mit der zehnten und elften Ader 10, 11 in Verbindung.

Im Bereich der Lokomotive sind die zehnte und elfte Ader über weitere Dioden 49 mit einem normalerweise geöffneten Relais 50 verbunden, bei dessen Betätigung ein Summer 51 bzw ein optisches Element zur Information des Lokführers an die Gleichspannungsquelle 13 angelegt wird.

Wenn nun einer der Notbremsschalter 45a bis 45e betätigt wird, schaltet das Vierfachschaltrelais 46a bis 46d die Zweifachschalter 7a', 7b', 8a', 8b', 9a', 9b' von der Gleichspannungsquelle 13' ab und verbindet diese über den Vorwiderstand 47 in der beschriebenen Polarität in Abhängigkeit vom gesetzten oder nicht gesetzten Zustand des Halterelais 40 entweder mit der zehnten Ader 10 oder mit der elften Ader 11. Im gesetzten Zustand des Relais wird das am Vorwiderstand 47 anliegende Signal über den Schalter 40b auf die zehnte Ader 10 geschaltet, während im nicht gesetzten Zustand des Halterelais 40 dieses Signal über den Schalter 40c auf die elfte Ader 11 geschaltet wird. In jedem Fall erreicht das Signal über eine der Dioden 49 das Relais 50, so daß der Summer 51 betätigt wird und den Lokführer über die Betätigung des Notbremsschalters 45a bis 45e in Kenntnis setzt. Aufgrund des vom Schaltzustand des Halterelais 40 abhängigen Signalübertragungsweges für die Rück meldung der Notbremsschalterstellung zur Lok wird vermieden, daß durch dieses Rückmeldungssignal in unerwünschter Weise der Schaltzustand des Halterelais 40 beeinflußt wird.

**Patentansprüche**

1. Schaltung zum Anlegen von Gleichspannungssignalen an ein mehradriges Kabel, insbesondere an ein mehradriges Zugdurchgangskabel, zum Steuern von wenigstens einer Gruppe von Schaltelementen (15 bis 17), die jeweils mit einer ersten Ader (12) und einer einem jeden Schaltelement (15 bis 17) zugeordneten weiteren Ader (9 bis 11) verbunden sind und bei Anliegen eines Steuerpotentiales an der entsprechenden weiteren Ader (9 bis 11) und eines Bezugspotentiales an der ersten Ader (12) ansprechen, mittels einer Gruppe von den Schaltelementen (15 bis 17) zugeordneten zwei-poligen Schaltern (7a, 7b, 8a, 8b, 9a, 9b), die jeweils mit der ersten Ader (12) und der den zugeordneten Schaltelement (15 bis 17) entsprechenden weiteren Ader (9 bis 11) verbunden sind, wobei bei einer Betätigung der Schalter (7a, 7b, 8a, 8b, 9a, 9b) die erste Ader (12) mit den Bezugspotential beaufschlagt wird und bei Nicht-Betätigung der Schalter (7a, 7b, 8a, 8b, 9a, 9b) die erste und die weitere Ader von den Bezugspotential und dem Steuerpotential getrennt sind, mit einem weiteren, wenigstens zwei-poligen Schalter (21, 22, 23, 27; 36, 37, 38), der bei seiner Betätigung eine der weiteren Adern (9, 10, 11) mit dem Bezugspotential und die erste Ader (12) mit dem Steuerpotential beaufschlagt, **dadurch gekennzeichnet**

daß eine erste (10) der weiteren Adern (9, 10, 11) so beschaltet ist, daß sie zum Übertragen eines ersten Befehls ("Notbremse verzögern") dient, mit dem eine unmittelbare Betätigung einer Notbremse nach Betätigen eines Notbremsschalters (45a bis 45e) unterbindbar ist,

daß eine zweite (11) der weiteren Adern (9, 10, 11) so beschaltet ist, daß sie zum Übertragen eines zweiten Befehls ("Verzögerung aufheben") dient, mit dem die Wirkung des ersten Befehls aufhebbar ist

daß an die erste weitere Ader (11) ein Sahcaltelement (34, 34a) angeschlossen ist, das durch den weiteren Schalter (21, 22, 23, 27; 37, 37, 38) betätigbar ist, und mit dem eine Selbsthalteschaltung (40) setzbar ist, mit der die Notbremse (44) deaktivierbar ist und

daß zweite weitere Ader (11) ein Schaltelement (35, 35a) angeschlossen ist, mit dem die Selbsthalteschaltung rücksetzbar ist.

2. Schaltung nach Anspruch 1, **dadurch gekennzeichnet**, daß der weitere Schalter als wenigstens drei-poliger Schalter (36, 37, 38) ausgebildet ist, bei dessen Betätigung derjenige der zwei-poligen Schalter (7a, 7b, 8a, 8b, 9a, 9b) von der weiteren Ader (9 bis 11) getrennt wird, der an derjenigen weiteren Ader (9 bis 11) angeschlossen ist, an die mittels des wenigstens drei-poligen Schalters das Bezugspotential anlegbar ist.

3. Schaltung nach Anspruch 2, **dadurch gekennzeichnet**, daß der wenigstens drei-polige Schalter (36, 37, 38) als wenigstens sechs-poliger Schalter ausgebildet ist.

4. Schaltung nach Anspruch 2 oder 3, **dadurch gekennzeichnet**, daß bei Betätigung des wenigstens drei-poligen Schalters (36, 37, 38) das Bezugspotential und das Steuerpotential von dem zwei-poligen Schalter (7a, 7b, 8a, 8b, 9a, 9b) abgekoppelt werden.

5. Schaltung nach einem der Ansprüche 1 bis 4, **dadurch gekennzeichnet**, daß die Schaltelemente (15 bis 17) über Dioden (18 bis 20) an die weiteren Adern (9 bis 11) angeschlossen sind.

6. Schaltung nach Anspruch 5, **dadurch gekennzeichnet**, daß die weiteren Schaltelemente (34, 35) an die zwei Adern (9, 10, 11; 12) über weitere Dioden (31, 32) angeschlossen sind und daß zwischen dem weiteren Schalter (21, 22, 23, 27; 36, 37, 38) und der weiteren Ader (9, 10, 11) ein strombegrenzendes Element (24, 25, 26) geschaltet ist.

7. Schaltung nach einem der Ansprüche 1 bis 6, **dadurch gekennzeichnet**, daß die Selbsthalteschaltung (40) ein Ventil (41) betätigt, mit dem die pneumatische betätigbare Notbremse (44) von durch Notbremsschalter (45a bis 45e) betätigbaren Notbremsventilen (43a bis 43c) absperrbar ist, so daß beim Absperren des Ventils (41) eine Betätigung der Notbremse (44) verhindert wird.

8. Schaltung nach Anspruch 7, **dadurch gekennzeichnet**, daß diese Selbsthalteschaltung als Halterelais (40) ausgeführt ist.

9. Schaltung nach Anspruch 8, **dadurch gekennzeichnet**, daß Halterelais (40) im ungesetzten Zustand die zweite weitere Ader (11) über eine Diode (48b) mit einem Knotenpunkt und im gesetzten Zustand die erste weitere Ader (10) über eine Diode (48a) mit dem Knotenpunkt verbindet, und daß zwischen dem Knotenpunkt und der ersten Ader (12) ein weiterer mindestens zwei-poliger Schalter (46a bis 46d) liegt, der bei Betätigung eines Notbremsschalters (45a bis 45e) das Steuerpotential an die erste Ader (12) und das Bezugspotential an den Knotenpunkt legt.

10. Schaltung nach Anspruch 9, **dadurch gekennzeichnet**, daß über je eine Diode (49a, 49b) ein Alarmgeber (50) im Bereich der Lokomotive an die erste und die zweite weitere Ader (10, 11) und an die erste Ader (12) angeschlossen ist.

**Claims**

1. A circuit arrangement for applying dc signals to a multicore cable, more particularly to a multicore train line, for controlling at least one group of circuit elements (15–17) which are each connected to a first core (12) and one further core (9–11) associated with each circuit element (15–17) and which respond to the application of a control potential to the corresponding. Further core (9–11) and of a reference potential to the first core (12), by means of a group of two-pole switches (7a, 7b, 8a, 8b, 9a, 9b) which are associated with a group of the circuit elements (15–17) and which are connected to the first core (12) and further core (9–11) corresponding to the associated circuit element (15–17), the first core (12) being energized at the reference potential upon on actuation of the switches (7a, 7b, 8a, 8b, 9a, 9b) and the first core and the further core being isolated from the reference potential and from the control potential in the absence of actuation of the switches (7a, 7b, 8a, 8b, 9a, 9b), one further and at least two-pole switch (21, 22, 23, 27; 36–38) being provided which when actuated energizes one of the further cores (9, 10, 11) at the reference potential and the first core (12) with the control potential, characterised in that a first core (10) of the further cores (9–11) is so wired as to transmit a first instruction ("delay emergency brake") enabling an immediate actuation of an emergency brake to be negated after actuation of an emergency brake switch (45a to 45e); a second (11) of the further cores (9, 10, 11) is so wired as to transmit a second instruction ("cancel delay") for cancelling the effect of the first instruction; there is connected to the first further core (10) a circuit element (34, 34a) which is actuatable by the further switch (21, 22, 23, 27; 36, 37, 38) and which is adapted to set a self-holding circuit (40) for deactivation of the emergency brake (44); and there is connected to the second further core (11) a circuit element (35, 35a) for resetting the self-holding circuit arrangement.

2. A circuit arrangement according to claim 1, characterised in that the further switch is an at least three-pole switch (36–38) and upon its operation whichever of the two-pole switches (7a, 7b, 8a, 8b, 9a, 9b) which is connected to the further core (9–11) to which the reference potential can be applied by means of the at least three-pole switch is isolated from the further core (9–11).

3. A circuit arrangement according to claim 2, characterised in that the at least three-pole switch (36–38) is an at least six-pole switch.

4. A circuit arrangement according to claim 2 or 3, characterised in that upon operation of the at least three-pole switch (36–38) the reference potential and the control potential are disconnected from the two-pole switch (7a, 7b, 8a, 8b, 9a, 9b).

5. A circuit arrangement according to any of claims 1–4, charactrerised in that the circuit elements (15–17) are connected by way of diodes (18–20) to the further cores (9–11).

6. A circuit arrangement according to claim 5, characterised in that the further circuit elements (34, 35) are connected to the two cores (9–11; 12) by way of further diodes (31, 32) and a current-limiting element (24–26) is connected between the further switch (21–23, 27; 36–38) and the further core (9–11).

7. A circuit arrangement according to any of claims 1–6, characterised in that the self-holding circuit (40) operates a valve (41) for isolating the pneumatic emergency brake (44) from emergency brake valves (43a–43c) operable by emergency brake switches (45a–45e) so that when the valve (41) is shut off operation of the emergency brake (44) is inhibited.

8. A circuit arrangement according to claim 7, characterised in that the self-holding circuit arrangement is a holding relay (40).

9. A circuit arrangement according to claim 8, characterised in that the holding relay (40) when in the unset state connects the second further core (11) by way of a diode (48b) to a junction and when set connects the first further core (10) by way of a diode (48a) to the junction; and between the junction and the first core (12) there is a further at least two-pole switch (46a–46d) which upon operation of an emergency brake switch (45a–45e) applies the control potential to the first core (12) and applies the reference potential to the junction.

10. A circuit arrangement according to claim 9, characterised in that a warning device (50) near the locomotive is connected in each case by way of a diode (49a, 49b) to the first further core (10) and second further core (11) and to the first core (12).

## Revendications

1. Circuit pour envoyer des signaux à tension continue dans un câble à plusieurs conducteurs, en particulier à un câble à plusieurs conducteurs traversant un train, pour commander au moins un groupe de commutateur (15 à 17) qui sont respectivement reliés à un premier conducteur (12) et à un autre conducteur (9 à 11) correspondant à chaque commutateur (15 à 17) et qui répondent lors de l'envoi d'un potentiel de commande dans l'autre conducteur (9 à 11) correspondant et d'un potentiel de référence dans le premier conducteur (12), au moyen d'un groupe de commutateurs bipolaires (7a, 7b, 8a, 8b, 9a, 9b), qui correspondant aux commutateurs (15 à 17) et qui sont respectivement reliés avec le premier conducteur (12) et avec l'autre conducteur (9 à 11) correspondant au commutateur correspondant (15 à 17), étant précisé que, si l'on actionne les commutateurs (7a, 7b, 8a, 8b, 9a, 9b) c'est le premier conducteur (12) qui est porté au potentiel de référence et que, si l'on n'actionne pas les commutateurs (7a, 7b, 8a, 8b, 9a, 9b), le premier conducteur est séparé du potentiel de référence et les autres conducteurs sont séparés du potentiel de commande, et comportant aussi un autre commutateur, au moins bipolaire (21, 22, 23, 27; 36, 37, 38) qui, si on l'actionne, porte l'un des autres conducteurs (9, 10, 11) au potentiel de référence et le premier conducteur (12) au potentiel de commande, caractérisé par le fait qu'un premier (10) des autres conducteurs (9, 10, 11) est mis en circuit de façon telle qu'il sert à transmettre une première instruction ("différer le freinage d'urgence") grâce à laquelle peut être empêchée une manœuvre immédiate du frein d'urgence après manœuvre d'un commutateur de frein d'urgence (45a à 45e),
par le fait qu'un second (11) des autres conducteurs (9, 10, 11) est mis en circuit de façon telle qu'il sert à transmettre une seconde instruction ("ne plus différer le freinage d'urgence") grâce à laquelle on peut supprimer l'action de la première instruction,
par le fait qu'au premier autre conducteur (10) est relié un commutateur (34, 34a) qui peut être manœuvré par les autres commutateurs (21, 22, 23, 27; 36, 37, 38) et avec lequel peut être excité un relais d'automaintien (40) avec lequel le frein d'urgence (44) peut être désactivé, et
par le fait qu'au second autre conducteur (11) est relié un commutateur (35, 35a) avec lequel le relais d'automaintien peut être désexcité.

2. Circuit selon la revendication 1, caractérisé par le fait que l'autre commutateur est conçu sous forme de commutateur au moins tripolaire (36, 37, 38) lors de la manœuvre duquel est séparé de l'autre conducteur (9 à 11) celui des interrupteurs bipolaires (7a, 7b, 8a, 8b, 9a, 9b) qui est relié à celui des autres conducteurs (9 à 11) qui peut être porté au potentiel de référence au moyen de l'interrupteur au moins tripolaire.

3. Circuit selon la revendication 2, caractérisé par le fait que l'interrupteur au moins tripolaire (36, 37, 38) est conçu sous forme d'interrupteur au moins hexapolaire.

4. Circuit selon la revendication 2 ou 3, caractérisé par le fait qu'en manœuvrant le commutateur au moins tripolaire (36, 37, 38), on désaccouple le potentiel de référence et le potentiel de commande d'avec le commutateur bipolaire (7a, 7b, 8a, 8b, 9a, 9b).

5. Circuit selon l'une des revendications 1 à 4, caractérisé par le fait que les commutateurs (15 à 17) sont reliés aux autres conducteurs (9 à 11) par l'intermédiaire de diodes (28 à 20).

6. Circuit selon la revendication 5, caractérisé par le fait que les commutateurs (34, 35) sont reliés aux deux conducteurs (9, 10, 11; 12) par l'intermédiaire d'autres diodes (31, 32) et par le fait qu'entre l'autre commutateur (21, 22, 23, 27; 36, 37, 38) et l'autre conducteur (9, 10, 11) est mis en circuit un élément (24, 25, 26) de limitation de l'intensité.

7. Circuit selon l'une des revendications 1 à 6, caractérisé par le fait que le relais d'automaintien (40) manœuvre une vanne (41) grâce à laquelle le frein d'urgence (44) à manœuvre pneumatique peut être désaccouplé d'avec les vannes de frein d'urgence (43a à 43c) manœuvrables par les commutateurs de frein d'urgence (43a à 43c), de sorte que la fermeture de la vanne (41) interdit une manœuvre du frein d'urgence (44).

8. Circuit selon la revendication 7, caractérisé par le fait que le relais d'automaintien est réalisé sous forme d'un relais de maintien (40).

9. Circuit selon la revendication 8, caractérisé par le fait que le relais de maintien (40) relie, à l'état désactivé, le second autre conducteur (11) avec un nœud par l'intermédiaire d'une diode (48b) et, à l'état activé, le premier autre conducteur (10) avec le nœud par l'intermédiaire d'une diode (48a) et
par le fait qu'entre le nœud et le premier conducteur (12) se trouve un commutateur au moins bipolaire (46a à 46d) qui, lorsque l'on manœuvre un interrupteur de frein d'urgence (45a à 45e), envoie le potentiel de commande dans le premier conducteur (12) et le potentiel de référence au nœud.

10. Circuit selon la revendication 9, caractérisé par le fait que, par l'intermédiaire de chaque fois une diode (49a, 49b), un émetteur d'alarme (50) est relié, dans la locomotive, au premier et au second autres conducteurs (10, 11) et au premier conducteur (12).

FIG. 1

EP 0 282 067 B1

FIG. 2

FIG. 3a

EP 0 282 067 B1

FIG. 3b